# EUROPÄISCHE PATENTSCHRIFT

(11) **EP 2 997 277 B1**
(45) Veröffentlichungstag und Bekanntmachung des Hinweises auf die Patenterteilung: **19.09.2018**
(21) Anmeldenummer: 14720046.3
(22) Anmeldetag: 23.04.2014
(51) Int. Cl.: F16D 55/22, F16D 65/097

(54) **SATTELSCHEIBENBREMSE EINES FAHRZEUGS UND NIEDERHALTEFEDER EINER SOLCHEN BREMSE**
CALIPER DISC BRAKE OF A VEHICLE, IN PARTICULAR A COMMERCIAL VEHICLE, AND HOLDING-DOWN SPRING OF SUCH A BRAKE
FREIN À DISQUE À ÉTRIER D'UN VÉHICULE, EN PARTICULIER D'UN VÉHICULE UTILITAIRE, ET RESSORT DE RETENUE D'UN TEL FREIN

(30) Priorität: 13.05.2013 DE 102013008160
(43) Veröffentlichungstag der Anmeldung: 23.03.2016
(73) Patentinhaber: WABCO Europe BVBA, 1170 Brussels (BE)
(72) Erfinder: FALTER, Wolfgang, 69118 Heidelberg (DE); FRIEBUS, Oliver, 69123 Heidelberg (DE); JÄGER, Hellmut, 67067 Ludwigshafen (DE); JUNGMANN, Hans-Christian, 69517 Gorxheimertal (DE)
(74) Vertreter: Lauerwald, Jörg
(86) Internationale Anmeldenummer: PCT/EP2014/001084
(87) Internationale Veröffentlichungsnummer: WO 2014/183829

(56) Entgegenhaltungen:
- EP-A1- 2 184 506
- EP-A2- 0 694 707
- DE-A1-102008 029 044
- DE-B3-102007 036 353

## Beschreibung

Die Erfindung betrifft eine Sattelscheibenbremse eines Fahrzeugs, insbesondere eines Nutzfahrzeugs, mit einer eine Drehachse aufweisenden Bremsscheibe, einem Bremssattel, einem Bremsenträger, einem Kraftübertragungselement, wie etwa einem Belagträger und/oder einer Druckplatte, das in einem Schacht des Bremssattels oder des Bremsenträgers geführt und abgestützt ist, einer Niederhaltefeder zum Niederhalten des Kraftübertragungselements und einer von einer Halteeinrichtung an dem Sattel gehaltenen und abgestützten Niederhalteeinrichtung, die die Niederhaltefeder radial gegen die Kraftübertragungseinrichtung vorspannt und die Niederhaltefeder tangential in Drehrichtung bei Vorwärtsfahrt gegen die Kraftübertragungseinrichtung vorspannt, wobei die Halteeinrichtung eine parallel zur Drehachse liegende Mittellinie aufweist.

Bremsen der eingangs genannten Art sind bekannt, beispielsweise aus der EP 694 707 B3 oder der EP 2 184 506 A1, wobei deren Niederhaltefeder keine tangentiale Vorspannung aufweist. Charakteristisch für die Bremsen nach dem Stand der Technik ist der Achsversatz des Niederhaltebügels über eine außermittige formschlüssige Lagerung im Bremssattel, um über den formschlüssigen Eingriff in die dafür speziell ausgeformten Niederhaltefedern neben der radialen auch eine tangentiale Vorspannung auf die Bremsbeläge auszuüben.

Das Grundprinzip einer radialen und tangentialen Vorspannung hat sich bewährt und soll beibehalten werden. Jedoch werden erfindungsgemäß konstruktive und funktionelle Änderungen am Bremssattel sowie an den einschlägigen Teilen des Niederhaltesystems vorgenommen, um größere Wirtschaftlichkeit und größere Vielseitigkeit zu erreichen.

Die Figuren 1 und 2 zeigen die Bremse nach der EP 694 707 B3. Dabei zeigt Figur 1 einen in einer Schachtführung des Bremssattels oder Bremsenträgers radial einwärts und beidseitig in Umfangsrichtung geführten und abgestützten Bremsbelag 11, auf dessen radialer Außenkante eine gegenüber ihrer Mittenachse zu beiden Seiten hin symmetrisch ausgeformte Niederhaltefeder gelagert ist. Die Niederhaltefeder weist mittig einen radial tiefer liegenden Mittenbereich 3 auf, von dem sich die höher liegenden Federschenkel 6, 7 beidseitig entlang der Außenkante des Belags nach auswärts hin erstrecken, um dann endseitig federnd auf den Bremsbelag einzuwirken, wenn in den hier radial einwärts ausgeformten Mittenbereich unter Formschluß ein ebenfalls symmetrisch ausgeformter Niederhaltebügel 1 eingreift.

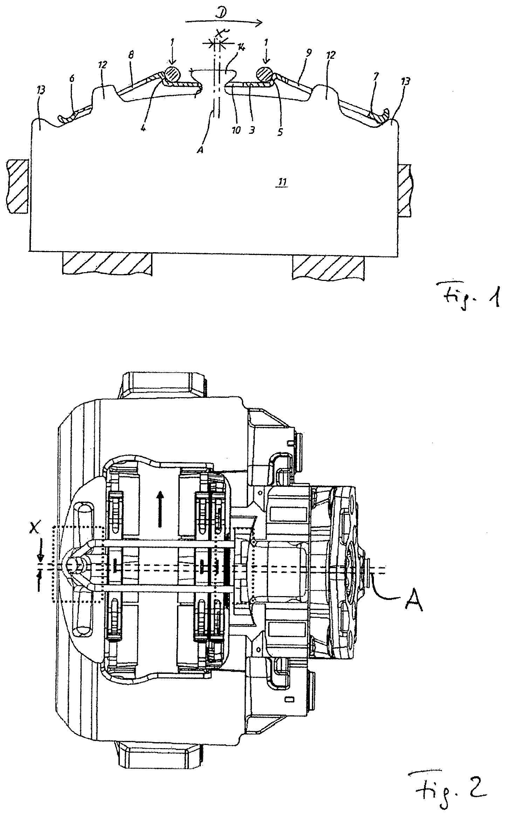

Der Niederhaltebügel 1 ist aus einem Rundmaterial ausgeformt. Die Federvorspannung tritt dann ein, wenn der Niederhaltebügel 1 wie nach Figur 2 auf der Zuspannseite in Formschlußöffnungen des Bremssattels verankert wird und dann andererseits fest, aber lösbar auf der Felgenseite auf einem Lagerblock des Bremssattels mittels Verschraubung befestigt wird. Der Niederhaltebügel erstreckt sich über eine dem Ein-/Ausbau der beidseitig der Bremsscheibe gelagerten Bremsbeläge dienenden Sattelöffnung und in einer Richtung zur Bremsen- bzw. Mittenachse A.

In Axialrichtung der Bremsbeläge sind die Niederhaltefedern mit dem Bremsbelag gekoppelt, weil radiale Ansätze 12, 14 von der Außenkante des Bremsbelages längliche Öffnungen 8, 9, 10 in der Feder durchdringen. Endseitig liegen die Federschenkel gegen weitere radiale Ansätze 13, 13 der Außenkante des Bremsbelages an. Die Niederhaltefedern sind als Blattfedern ausgebildet.

Die mittels der Niederhaltefeder auf den Bremsbelag einwirkende radiale und tangentiale Vorspannung wird nach dem Stand der Technik dadurch erzeugt, daß der Niederhaltebügel 1 in den radial ausgeformten Mittenbereich 3 der Niederhaltefeder formschlüssig eingreift und seinerseits unter Formschlüssigkeit in zuspann- und felgenseitigen Verankerungen des Bremssattels immer in Drehrichtung der Bremsscheibe bei Vorwärtsfahrt in Richtung Bremsscheibenauslaufseite um einen Achsversatz x gegenüber der Mitten- bzw. Bremsenachse A versetzt gelagert ist. Dadurch wird der entsprechende Federschenkel auch in Tangentialrichtung gedrängt. Für die außermittige formschlüssige Lagerung des Niederhaltebügels 1 müssen im Gußteil des Bremssattels die dafür erforderlichen gießtechnischen Ausformungen in entsprechender Positionierung vorhanden sein, die dann anschließend noch mechanischen Bearbeitungen zu unterziehen sind. Die Lagerstellen für den Niederhaltebügel 1 sind somit unsymmetrisch am/im Bremssattel ausgeformt.

Die einschlägigen Bremsen werden beidseitig der Achse verbaut, so daß sie auch spiegelbildlich ausgeführt sein müssen. Dies bedeutet, daß für Bremssättel nach dem Stand der Technik für eine linke und eine rechte Bremse unterschiedliche Gußmodellausführungen zur Herstellung der unsymmetrischen Lager- und Haltebereiche erforderlich sind. Demzufolge sind auch die Positionen der nachfolgenden mechanischen Bearbeitung für die Lager- und Haltebereiche bei einer linken Bremse anders als bei einer rechten Bremse.

Ein weiteres Problem bei herkömmlichen Bremsen, insbesondere der Bremse nach der EP 694 707 B3, besteht darin, daß die Niederhaltefeder resultierend aus der Gesamtkonstruktion der Bremse und der Feder in mechanischer Hinsicht ungünstig belastet wird.

Der Erfindung liegt die Aufgabe zugrunde, die Bremse nach der EP 694 707 B3 derart weiterzubilden, daß die genannten Nachteile beseitigt sind. Insbesondere liegt der Erfindung die Aufgabe zugrunde, die Niederhaltefeder derart auszugestalten, daß sie mechanisch im Betrieb weniger belastet wird.

Erfindungsgemäß wird die gestellte Aufgabe bei einer Sattelscheibenbremse der eingangs genannten Art dadurch gelöst, daß die Niederhaltefeder zwei gleiche Federschenkel und einen dazwischen liegenden trapezförmigen Mittelbereich aufweist, der nach radial innen vorspringt, wobei die beiden Schenkel des trapezförmigen Bereichs mit dem Boden im entspannten Zustand jeweils einen Winkel von mehr als 95° und mit dem jeweils benachbarten Federschenkel einen Winkel von weniger als 85° einschließt.

Diese Ausgestaltung der Niederhaltefeder ist mechanisch besonders vorteilhaft.

Erfindungsgemäß bevorzugt ist vorgesehen, daß die Niederhaltefeder im entspannten Zustand im Übergangsbereich zwischen den beiden Schenkeln des trapezförmigen Bereichs und dessen Boden jeweils bogenförmig mit einem Radius von 10 mm bis 16 mm und im Übergangsbereich zwischen dem trapezförmigen Bereich und den Federschenkeln bogenförmig mit einem Radius von 4 mm bis 9,5 mm verläuft.

Auch dadurch werden erhebliche mechanische Vorteile erzielt.

Weiter bevorzugt ist vorgesehen, daß die Niederhaltefeder symmetrisch ist und wegen der Symmetrie in zwei um 180° gegeneinander verdrehten Einbaulagen eingebaut werden kann.

Dadurch werden Verwechslungen vermieden.

Bei der Niederhaltefeder handelt es sich erfindungsgemäß weiter bevorzugt um eine Blattfeder.

Nach einer weiter bevorzugten Ausführungsform der Erfindung ist vorgesehen, daß die Niederhalteeinrichtung zum Erzeugen der Radialvorspannung mit einem sikkenförmigen ersten Bereich und zum Erzeugen der Tangentialvorspannung mit einem zweiten Bereich an der Niederhaltefeder anliegt und der Abstand des Mittelpunkts des ersten Bereichs von dem Mittelpunkt des zweiten Bereichs in Radialrichtung kleiner ist als in Tangentialrichtung.

Diese Ausgestaltung trägt wiederum zur mechanischen Entlastung der Niederhaltefeder bei.

Neben der oben im einzelnen beschriebenen Sattelscheibenbremse schafft die Erfindung auch eine einschlägige Niederhaltefeder.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 1 und 2: Sattelscheibenbremsen nach dem Stand der Technik,

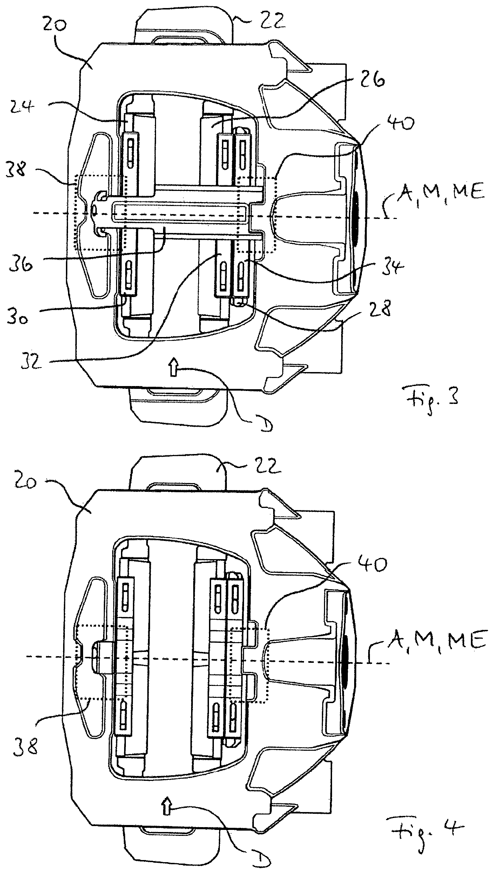

- die Figuren 3 und 4: schematische Draufsichten auf eine Sattelscheibenbremse nach einem Ausführungsbeispiel der Erfindung,

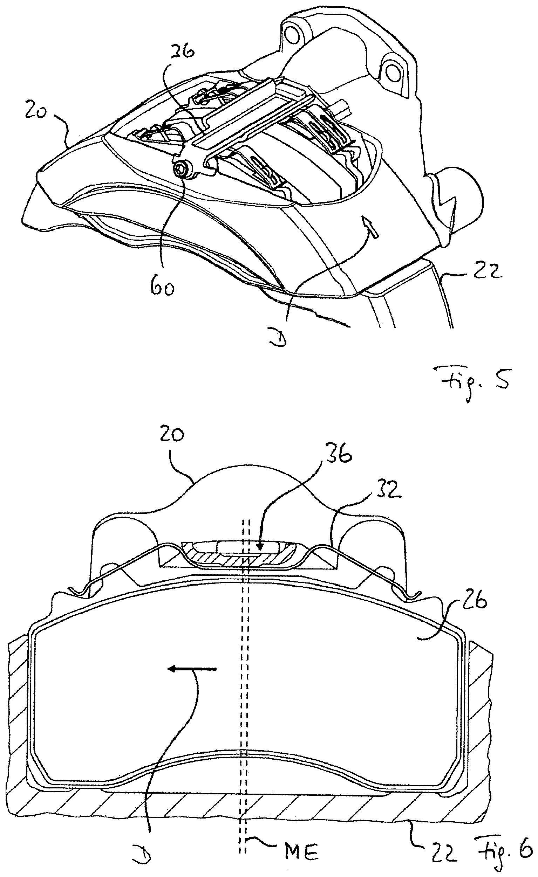

- Figur 5: eine schematische perspektivische Ansicht der Bremse nach den Figuren 3 und 4,
- Figur 6: eine schematische Schnittansicht der Bremse nach den Figuren 3 und 4,
- Figur 7: schematisch einen Niederhaltebügel der Bremse nach den Figuren 3 und 4,
- die Figuren 8 und 9: das Zusammenspiel des Niederhaltebügels mit dem Bremssattel,
- Figur 10: eine perspektivische Teilansicht auf einen Haltebereich des Bremssattels für den Niederhaltebügel,
- Figur 11: eine schematische Teilansicht eines anderen Haltebereichs des Sattels für den Niederhaltebügel,
- die Figuren 12 und 13: zwei verschiedene Ausführungsformen der Befestigung des Niederhaltebügel auf der Felgenseite des Sattels,
- die Figuren 14 bis 18: verschiedene Ansichten von Niederhaltefedern für die Bremse nach den Figuren 3 und 4 und
- die Figuren 19 und 20: Schnittansichten des Zusammenspiels des Niederhaltebügels mit der Niederhaltefeder nach einem Ausführungsbeispiel der Erfindung bzw. nach dem Stand der Technik.

Das in der Zeichnung dargestellte Ausführungsbeispiel einer Sattelscheibenbremse nach der Erfindung weist eine (nicht gezeigte) Bremsscheibe auf, deren Drehachse mit A bezeichnet ist. Die Drehrichtung bei Vorwärtsfahrt ist mit einem Pfeil D bezeichnet. Die Bremse weist einen Bremssattel 20 und einen Bremsenträger 22 auf, wobei der Bremssattel die (nicht gezeigte) Bremsscheibe rahmenartig umgreift. Ein felgenseitiger Bremsbelag, bestehend aus einer metallischen Rückenplatte mit Reibbelag, ist mit der Bezugszahl 24 bezeichnet, ein zuspannseitiger Bremsbelag, bestehend aus einer metallischen Rückenplatte mit Reibbelag, mit der Bezugszahl 26 und eine Druckplatte mit der Bezugszahl 28. Bei den genannten Elementen handelt es sich um Kraftübertragungselemente. Sie werden mit Niederhaltefedern 30, 32 bzw. 34 niedergehalten, d.h. in Radialrichtung vorgespannt. Wie später noch erläutert wird, werden der Bremsbelag 26 und die Druckplatte 28 auch in Tangentialrichtung vorgespannt.

Zum Niederhalten der genannten Niederhaltefedern 30, 32 und 34 dient eine in Form eines Niederhaltebügels 36 ausgeführte Niederhalteeinrichtung, die sich über eine dem Ein-/Ausbau der beidseitig der Bremsscheibe gelagerten Bremsbeläge dienenden Sattelöffnung erstreckt. Der Niederhaltebügel 36 ist dabei nicht nur für die radiale Vorspannung der Niederhaltefedern 30, 32 und 34 verantwortlich, sondern auch für die tangentiale Vorspannung der Niederhaltefedern 32 und 34. Auf die Niederhaltefeder 30 und den Bremsbelag 24 wirkt demgegenüber nur eine radiale Vorspannung, jedoch keine tangentiale. Dadurch werden für den Betrieb der Bremse ungünstige und sich auf die leichte Verschiebbarkeit des Gleitsattels auswirkende Momente vermieden, die auf eine Tangentialvorspannung der Niederhaltefeder 30 und des Bremsbelags 24 zurückgingen.

Der Bremssattel 20, bei dem es sich in dem in der Zeichnung dargestellten Ausführungsbeispiel um einen Gleitsattel handelt, weist eine Halteeinrichtung zum Halten und Abstützen des Niederhaltebügels 36 auf. Zu dieser Halteeinrichtung gehören zwei Bereiche, nämlich ein felgenseitiger Bereich 38 und ein zuspannseitiger Bereich 40. Beide Bereiche sind (in der Draufsicht) symmetrisch zu einer Mittellinie M ausgebildet, die parallel zur Drehachse A liegt. Sie sind auch symmetrisch zu einer radialen Mittelebene ME, die von der Drehachse A und der Mittellinie M aufgespannt wird. Durch diese Symmetrie ist die Kontur der Halteeinrichtung derart, daß ein und dieselbe Form beim Gießen des Sattels verwendet werden kann, gleichgültig ob der Sattel für eine rechte oder eine linke Bremse ausgelegt ist.

Zu dem zuspannseitigen Bereich 40 der Halteeinrichtung gehört ein dachkantenartig ausgebildeter Vorsprung 42. Seine Seitenflanken 44, 46 dienen zum Aufnehmen von Tangentialkräften. Seine radial innen liegende Flanke 48 dient zum Aufnehmen von Radialkräften.

Der Niederhaltebügel 36 ist auf der Zuspannseite zu dem Vorsprung 42 passend ausgeführt. So weist er eine Einbuchtung 50 auf, die in montiertem Zustand den Vorsprung 42 aufnimmt. Seitenflanken 52 und 54 der Einbuchtung 50 dienen dabei zum Übertragen von Tangentialkräften. Eine radial außen liegende Fläche 56 dient zum Übertragen von Radialkräften. Sie liegt in eingebautem Zustand an der Flanke 48 des zur Bremsscheibe weisenden Vorsprungs 42 an.

In dem felgenseitigen Bereich 38 weist der Sattel 20 eine'Gewindebohrung 58 auf, in die zum Befestigen des Niederhaltebügels 36 eine Schraube 60 eingeschraubt wird. Der felgenseitige Bereich 38 der Halteeinrichtung ist wie der zuspannseitige Bereich 40 symmetrisch bezüglich der Mittellinie M und der Mittelebene ME ausgeführt. Lediglich die Gewindebohrung 58 liegt nicht symmetrisch, um zu verhindern, daß ein Niederhaltebügel für eine rechte (linke) Bremse an einer linken (rechten) Bremse montiert wird. Sie ist nicht gießtechnisch ausgebildet, sondern wird nach dem eigentlichen Gießen des Sattels mittels eines Bohrers und/oder eines Gewindeschneiders eingebracht.

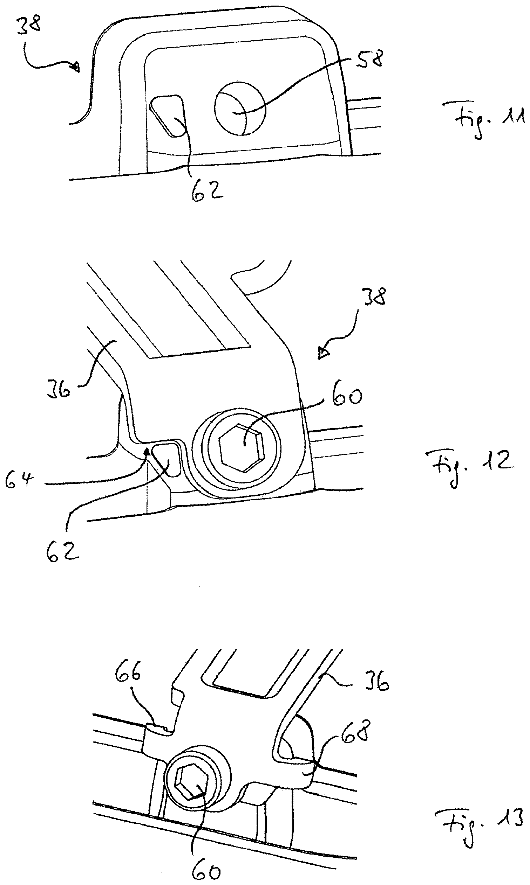

In dem Bereich 38 der Halteeinrichtung ist eine Kodiereinrichtung vorgesehen. Dazu kann gemäß den Figuren 11 und 12 bei der mechanischen Bearbeitung ein Überstand 62 ausgelassen werden, so daß gemäß Figur 12 nur ein solcher Niederhaltebügel 36 montiert werden kann, der eine zu dem Überstand 62 passende Ausnehmung 64 aufweist. Wie die Gewindebohrung 58 ist der Überstand 62 nicht durch Gießtechnik ausgebildet und kann daher unsymmetrisch angeordnet sein.

Zusätzlich oder alternativ kann auch vorgesehen sein, daß der Niederhaltebügel 36 gemäß Figur 13 Zapfenansätze aufweist, die korrespondierende Strukturen an dem Sattel 20 umgreifen. Dies stellt wiederum sicher, daß nur ein passender Niederhaltebügel 36 montiert werden kann.

Bei dem Überstand 62, der Ausnehmung 64 und den Zapfenansätzen 66 und 68 handelt es sich mithin um Kodiereinrichtungen, die sicherstellen, daß immer nur ein passender Niederhaltebügel an dem Sattel angebracht wird.

Der Niederhaltebügel ist in zweierlei Hinsicht unsymmetrisch. Zum einen weist er Tangentialansätze 70 und 72 nur auf der Zuspannseite auf, nicht aber auf der Felgenseite. Zum anderen sind seine Abmessungen V1, V2 gemessen in Tangentialrichtung von der Mittellinie M im Bereich des ersten Ansatzes 70, d.h. auf der Scheibenauslaufseite größer als im Bereich des Ansatzes 72, also auf der Scheibeneinlaufseite.

Durch diese Ausgestaltung ist es möglich, dem zuspannseitigen Bremsbelag 26 und der auf der Zuspannseite liegenden Druckplatte 28 eine tangentiale Vorspannung einzuprägen, ohne daß der Bremssattel 20 in den Bereichen 38 und 40 seiner Halteeinrichtung für den Niederhaltebügel 36 entsprechend unsymmetrisch ausgestaltet werden müßte und ohne daß eine nachteilige Tangentialvorspannung auf den felgenseitigen Bremsbelag 24 wirkt.

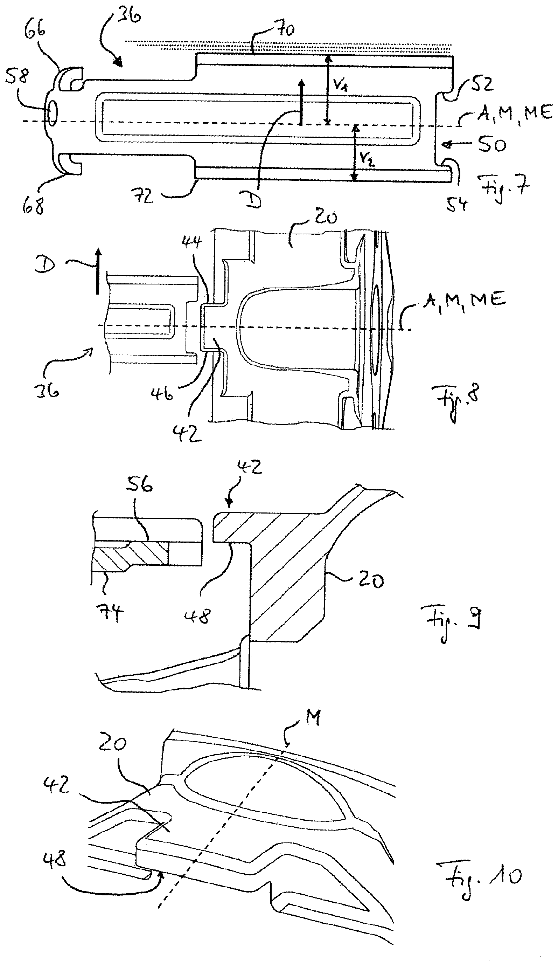

Auch die Vielfältigkeit, mit Aufbringung unterschiedlicher Federvorspannungen, kann im Zusammenspiel mit den Niederhaltefedern in einfacher Weise gezielt gesteuert werden. Dies kann dadurch erfolgen, daß nach Fig. 7 in Richtung der gestrichelten Linien zum Scheibenauslauf nur die Breite V1 des Niederhaltebügels verändert werden muß. Dafür ist lediglich das umzuformende Blechstanzteil entsprechend auszubilden. Im Zusammenspiel mit den o. g. Kodierungen kann dann eine genaue Zuordnung zur entsprechenden Bremse und deren Einsatzbedingungen erfolgen, ohne daß dafür Anpassungen an den Gußbereichen des Bremssattels vorzunehmen sind.

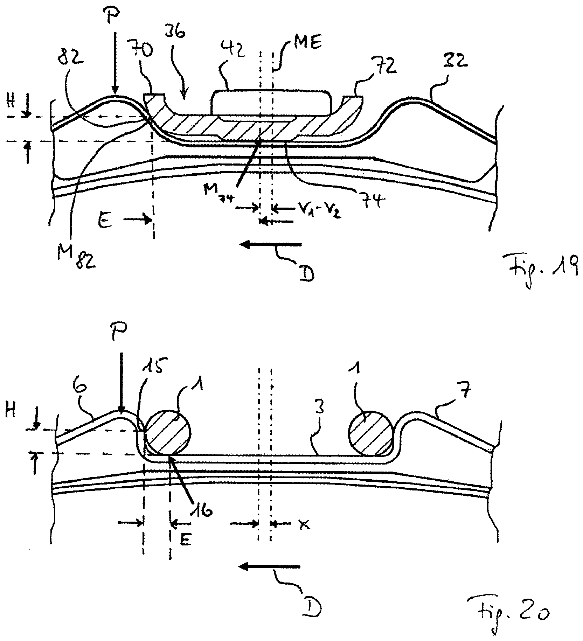

Der Niederhaltebügel 36 ist vorzugsweise als umgeformtes Blechstanzteil hergestellt und weist eine Sicke auf, die entsprechend der Differenz zwischen den Abmessungen V1 und V2 bezüglich der Mittellinie M bzw. der Radialebene R versetzt ist. Die Sicke ist mit der Bezugszahl 74 bezeichnet. Sie liegt in montiertem Zustand flächig an der jeweiligen Niederhaltefeder 30, 32 bzw. 34 an und dient zum Einprägen der radialen Vorspannung, vgl. Figur 19. Demgegenüber liegt bei der Ausgestaltung nach Figur 20, die dem Stand der Technik entspricht, nur eine Linienanlage vor. Eine solche Linienanlage belastet selbstverständlich die Niederhaltefeder erheblich stärker als die Flächenanlage nach Figur 19.

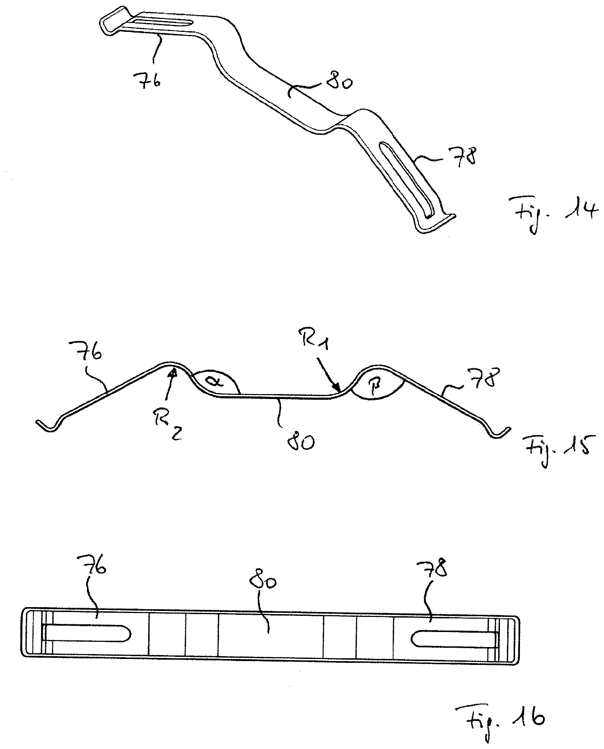

Ausgestaltungen der Niederhaltefeder in Form einer Blattfeder sind insbesondere den Figuren 14 bis 18 zu entnehmen. Sie weist zwei gleiche Federschenkel 76, 78 und einen dazwischen liegenden trapezförmigen Mittelbereich 80 auf, der nach radial innen vorspringt. Die beiden Schenkel des trapezförmigen Bereichs 80 schließen mit dessen Boden in entspanntem Zustand jeweils einen Winkel α von mehr als 95° ein. Bei dem in der Zeichnung dargestellten Ausführungsbeispiel sind es 117°. Mit den beiden benachbarten Federschenkeln 76, 78 schließen sie jeweils einen Winkel β von weniger als 85° ein. In dem dargestellten Ausführungsbeispiel beträgt der Winkel β 74°.

Die Federn sind in der Seitenansicht nicht eckig. Vielmehr sind sie in entspanntem Zustand im Übergangsbereich zwischen den beiden Schenkeln des trapezförmigen Bereichs 80 und dessen Boden jeweils bogenförmig mit einem Radius von jeweils 10 mm bis 16 mm, in dem dargestellten Ausführungsbeispiel 13 mm, und im Übergangsbereich zwischen dem trapezförmigen Bereich 80 und den Federschenkeln 76, 78 bogenförmig mit einem Radius von 4 mm bis 9,5 mm, in dem dargestellten Ausführungsbeispiel 7 mm.

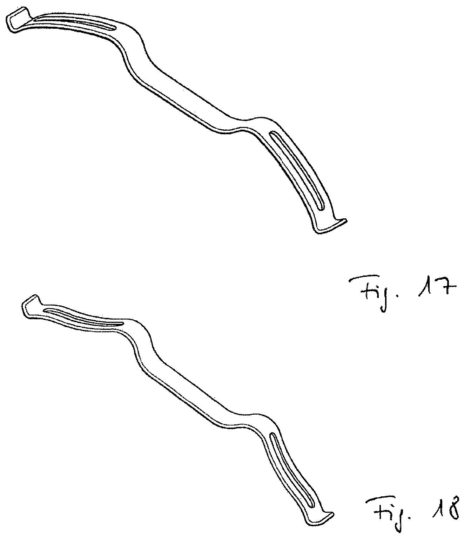

Die Federschenkel 76, 78 können entsprechend den Figuren 14 bis 16 gerade ausgeführt sein. Sie können aber auch konvex oder konkav gestaltet sein, wie dies den Figuren 17 und 18 zu entnehmen ist.

Derjenige Bereich des Vorsprungs 70, der an der Niederhaltefeder 32 anliegt, ist in Figur 19 mit der Bezugszahl 82 bezeichnet. Sein Mittelpunkt M₈₂ hat von dem Mittelpunkt M₇₄ in Radialrichtung den Abstand H und in Tangentialrichtung den Abstand E, wobei gilt H < E. Im Gegensatz dazu liegen die entsprechenden Anlagelinien 15 und 16 bei dem Stand der Technik derart, daß gilt: H = E, vgi. Fig. 20.

Bei dem in der Zeichnung dargestellten Ausführungsbeispiel liegt der Ort P der höchsten (Druck-)Spannung in der Niederhaltefeder 32, der sich im Übergangsbereich zwischen dem Mittelbereich 74 und dem Federschenkel 76 befindet, weit entfernt von dem (flächigen) Bereich des höchsten Verschleißes durch Reibung bzw. durch Radialanschlag des Bremsbelages bzw. der Druckplatte in den Kontaktbereichen.

Bei gleichen Einsatzbedingungen, wie vorab genannt, liegt demgegenüber nach dem Stand der Technik aus Figur 20 im radialen Kontaktbereich nur eine Linienanlage vor, so dass hier der Ort des höchsten Verschleißes im radialen Bereich mit der Linienanlage (siehe Pfeil) dann unmittelbar und nahe dem Bereich P der höchsten (Druck-)Spannung in der Niederhaltefeder angrenzt, wobei hier gilt H = E.

Wie insbesondere Figur 19 zu entnehmen ist, hat der Niederhaltebügel 36 im Querschnitt eine trogartige Ausgestaltung, wobei er außen, d.h. am Ende der Vorsprünge 70, 72 schräg angestellt ist. Dadurch sind geringfügige Relativbewegungen (Gleiten) bei Reversierbewegungen der Niederhaltefeder möglich. Beim Stand der Technik nach Figur 20 mit dem Rundmaterial, das an senkrechten Federabschnitten anliegt, ist dies nicht so. Die erfindungsgemäße Ausgestaltung senkt die Belastungen in den kritischen Zonen.

Wie im Stand der Technik nach Figur 1 sind auch hier in Axialrichtung der Bremsbeläge die Niederhaltefedern mit dem Bremsbelag gekoppelt, weil radiale Ansätze (12) von der Außenkante des Bremsbelages längliche Öffnungen (8, 9) in den beiden seitlichen Federschenkeln der Feder durchdringen. Endseitig liegen die Federschenkel gegen weitere radiale Ansätze (13, 13) der Außenkante des Bremsbelages an. Die Niederhaltefedern sind als Blattfedern ausgebildet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Sattelscheibenbremse eines Fahrzeugs, insbesondere eines Nutzfahrzeugs, mit
einer eine Drehachse (A) aufweisenden Bremsscheibe,
einem Bremssattel (20),
einem Bremsenträger (22),
einem Kraftübertragungselement, wie etwa einem Belagträger (24, 26) und/oder einer Druckplatte (28), das in einem Schacht des Bremssattels oder des Bremsenträgers geführt und abgestützt ist,
einer Niederhaltefeder (30, 32, 34) zum Niederhalten des Kraftübertragungselements und
einer von einer Halteeinrichtung (38, 40) an dem Sattel gehaltene und abgestützte Niederhalteeinrichtung (36), die
die Niederhaltefeder radial gegen die Kraftübertragungseinrichtung vorspannt und
die Niederhaltefeder tangential in Drehrichtung (D) bei Vorwärtsfahrt gegen die Kraftübertragungseinrichtung vorspannt, wobei
die Halteeinrichtung eine parallel zur Drehachse liegende Mittellinie (M) aufweist,
**dadurch gekennzeichnet, daß**
die Niederhaltefeder (30, 32, 34) zwei gleiche Federschenkel (76, 78) und einen dazwischen liegenden trapezförmigen Mittelbereich (80) aufweist, der nach radial innen vorspringt, wobei die beiden Schenkel des trapezförmigen Bereichs mit dem Boden im entspannten Zustand jeweils einen Winkel (α) von mehr als 95° und mit dem jeweils benachbarten Federschenkel einen Winkel (β) von weniger als 85° einschließen.

2. Sattelscheibenbremse nach Anspruch 1, **dadurch gekennzeichnet, daß** die Niederhaltefeder (30, 32, 34) im entspannten Zustand im Übergangsbereich zwischen den beiden Schenkeln des trapezförmigen Bereichs und dessen Boden jeweils bogenförmig mit einem Radius (R₁) von 10 mm bis 16 mm und im Übergangsbereich zwischen dem trapezförmigen Bereich und den Federschenkeln (76, 78) bogenförmig mit einem Radius (R₂) von 4 mm bis 9,5 mm verläuft.

3. Sattelscheibenbremse nach Anspruch 1 oder 2, **dadurch gekennzeichnet, daß** die Niederhaltefeder symmetrisch ist und wegen der Symmetrie in zwei um 180° gegeneinander verdrehten Einbaulagen eingebaut werden kann.

4. Sattelscheibenbremse nach einem der vorangehenden Ansprüche, **dadurch gekennzeichnet, daß** die Niederhaltefeder (30, 32, 34) eine Blattfeder ist.

5. Sattelscheibenbremse nach einem der vorangehenden Ansprüche, **dadurch gekennzeichnet, daß** die Niederhalteeinrichtung (36) zum Erzeugen der Radialvorspannung mit einem sickenförmigen ersten Bereich (74) und zum Erzeugen der Tangentialvorspannung mit einem zweiten Bereich (82) an der Niederhaltefeder (30, 32, 34) anliegt und der Abstand des Mittelpunkts (M₇₄) des ersten Bereichs von dem Mittelpunkt (M₈₂) des zweiten Bereichs in Radialrichtung kleiner ist als in Tangentialrichtung (H < E).

6. Niederhaltefeder einer Sattelscheibenbremse eines Fahrzeugs nach einem der vorangehenden Ansprüche, insbesondere eines Nutzfahrzeugs, mit zwei gleichen Federschenkeln (76, 78) und einem dazwischen liegenden trapezförmigen Mittelbereich (80), der nach radial innen vorspringt, wobei die beiden Schenkel des trapezförmigen Bereichs mit dem Boden im entspannten Zustand jeweils einen Winkel (α) von mehr als 95° und mit dem jeweils benachbarten Federschenkel einen Winkel (β) von weniger als 85° einschließen.

7. Niederhaltefeder nach Anspruch 6, **dadurch gekennzeichnet, daß** sie im entspannten Zustand im Übergangsbereich zwischen den beiden Schenkeln des trapezförmigen Bereichs und dessen Boden jeweils bogenförmig mit einem Radius (R₁) von 10 mm bis 16 mm und im Übergangsbereich zwischen dem trapezförmigen Bereich und den Federschenkeln (76, 78) bogenförmig mit einem Radius (R₂) von 4 mm bis 9,5 mm verläuft.

8. Niederhaltefeder nach Anspruch 6 oder 7, **dadurch gekennzeichnet, daß** sie symmetrisch ist und wegen der Symmetrie in zwei um 180° gegeneinander verdrehten Einbaulagen eingebaut werden kann.

9. Niederhaltefeder nach einem der Ansprüche 6 bis 8, **dadurch gekennzeichnet, daß** sie eine Blattfeder ist.

## Claims

1. Caliper disc brake of a vehicle, in particular of a commercial vehicle, with
a brake disc having an axis of rotation (A),
a brake caliper (20),
a brake support plate (22),
a force transmission element, such as, for example, a pad support (24, 26) and/or a pressure plate (28), which is guided and supported in a well of the brake caliper or of the brake support plate,
a holding-down spring (30, 32, 34) for holding down the force transmission element, and
a holding-down device (36), which is held and supported on Caliper by a holding device (38, 40) and which
preloads the holding-down spring radially against the force transmission device and
preloads the holding-down spring tangentially in the direction of rotation (D) against the force transmission device during forward travel, wherein
the holding-down device has a center line (M) parallel to the axis of rotation,
**characterized in that**
the holding-down spring (30, 32, 34) has two identical spring legs (76, 78) and a trapezoidal central region (80) which is located in between and projects radially inward, wherein the two legs of the trapezoidal region each enclose an angle (α) of more than 95° with the base in the relaxed state and an angle (β) of less than 85° with the respectively adjacent spring leg.

2. Caliper disc brake according to Claim 1, **characterized in that**, in the relaxed state, the holding-down spring (30, 32, 34) in each case extends in an arc with a radius (R₁) of 10 mm to 16 mm in the transitional region between the two legs of the trapezoidal region and the base thereof and in an arc with a radius (R₂) of 4 mm to 9.5 mm in the transitional region between the trapezoidal region and the spring legs (76, 78).

3. Caliper disc brake according to Claim 1 or 2, **characterized in that** the holding-down spring is symmetrical and, owing to the symmetry, can be installed in two installation positions rotated by 180° relative to one another.

4. Caliper disc brake according to one of the preceding claims, **characterized in that** the holding-down spring (30, 32, 34) is a leaf spring.

5. Caliper disc brake according to one of the preceding claims, **characterized in that** the holding-down device (36) rests on the holding-down spring (30, 32, 34) by means of a bead-shaped first region (74) to produce the radial preload and rests on said spring by means of a second region (82) to produce the tangential preload, and the distance between the central point (M₇₄) of the first region and the central point (M₈₂) of the second region is smaller in a radial direction than in a tangential direction (H < E).

6. Holding-down spring of a caliper disc brake of a vehicle according to one of the preceding claims, in particular of a commercial vehicle, having two identical spring legs (76, 78) and a trapezoidal central region (80) which is located in between and projects radially inward, wherein the two legs of the trapezoidal region each enclose an angle (α) of more than 95° with the base in the relaxed state and an angle (β) of less than 85° with the respectively adjacent spring leg.

7. Holding-down spring according to Claim 6, **characterized in that**, in the relaxed state, it in each case extends in an arc with a radius (R₁) of 10 mm to 16 mm in the transitional region between the two legs of the trapezoidal region and the base thereof and in an arc with a radius (R₂) of 4 mm to 9.5 mm in the transitional region between the trapezoidal region and the spring legs (76, 78).

8. Holding-down spring according to Claim 6 or 7, **characterized in that** it is symmetrical and, owing to the symmetry, can be installed in two installation positions rotated by 180° relative to one another.

9. Holding-down spring according to one of Claims 6 to 8, **characterized in that** it is a leaf spring.

## Revendications

1. Frein à disque à étrier d'un véhicule, en particulier d'un véhicule utilitaire, avec
un disque de frein présentant un axe de rotation (A), un étrier de frein (20),
un support de frein (22),
un élément de transmission de force, comme par exemple un support de garniture (24, 26) et/ou un plateau de pression (28), qui est guidé et supporté dans un puits de l'étrier de frein ou du support de frein,
un ressort de serrage (30, 32, 34) pour le maintien de l'élément de transmission de force, et
un dispositif de serrage (36) maintenu et supporté sur l'étrier par un dispositif de serrage (38, 40), et qui
précontraint le ressort de serrage radialement contre le dispositif de transmission de force, et
précontraint le ressort de serrage tangentiellement dans le sens de rotation (D) en cas de déplacement en marche avant contre le dispositif de transmission de force, dans lequel
le dispositif de maintien présente une ligne centrale (M) située parallèlement à l'axe de rotation, **caractérisé en ce que** le ressort de serrage (30, 32, 34) présente deux branches de ressort égales (76, 78) et une région médiane trapézoïdale (80) située entre celles-ci, qui est saillante radialement vers l'intérieur, dans lequel les deux branches de la région trapézoïdale forment avec le fond, dans l'état détendu, respectivement un angle (α) de plus de 95° et avec la branche de ressort respectivement voisine un angle (β) de moins de 85°.

2. Frein à disque à étrier selon la revendication 1, **caractérisé en ce que** le ressort de serrage (30, 32, 34) dans l'état détendu s'étend dans la région de transition entre les deux branches de la région trapézoïdale et son fond respectivement en forme d'arc avec un rayon (R₁) de 10 mm à 16 mm et dans la région de transition entre la région trapézoïdale et les branches de ressort (76, 78) en forme d'arc avec un rayon (R₂) de 4 mm à 9,5 mm.

3. Frein à disque à étrier selon la revendication 1 ou 2, **caractérisé en ce que** le ressort de serrage est symétrique et en raison de sa symétrie peut être monté dans deux positions de montage tournées de 180° l'une par rapport à l'autre.

4. Frein à disque à étrier selon l'une quelconque des revendications précédentes, **caractérisé en ce que** le ressort de serrage (30, 32, 34) est un ressort à lame.

5. Frein à disque à étrier selon l'une quelconque des revendications précédentes, **caractérisé en ce que** le dispositif de serrage (36) s'applique sur le ressort de serrage (30, 32, 34) pour produire la précontrainte radiale avec une première région en forme de moulure (74) et pour produire la précontrainte tangentielle avec une deuxième région (82) et la distance entre le point central (M₇₄) de la première région et le point central (M₈₂) de la deuxième région est plus petite en direction radiale qu'en direction tangentielle (H < E).

6. Ressort de serrage d'un frein à disque à étrier d'un véhicule selon l'une quelconque des revendications précédentes, en particulier d'un véhicule utilitaire, avec deux branches de ressort égales (76, 78) et une région médiane trapézoïdale (80) située entre celles-ci, qui est saillante radialement vers l'intérieur, dans lequel les deux branches de la région trapézoïdale forment avec le fond, dans l'état détendu, respectivement un angle (α) de plus de 95° et avec la branche de ressort respectivement voisine un angle (β) de moins de 85°.

7. Ressort de serrage selon la revendication 6, **caractérisé en ce que** dans l'état détendu il s'étend dans la région de transition entre les deux branches de la région trapézoïdale et son fond respectivement en forme d'arc avec un rayon (R₁) de 10 mm à 16 mm et dans la région de transition entre la région trapézoïdale et les branches de ressort (76, 78) en forme d'arc avec un rayon (R₂) de 4 mm à 9,5 mm.

8. Ressort de serrage selon la revendication 6 ou 7, **caractérisé en ce qu'**il est symétrique et en raison de sa symétrie il peut être monté dans deux positions de montage tournées de 180° l'une par rapport à l'autre.

9. Ressort de serrage selon l'une quelconque des revendications 6 à 8, **caractérisé en ce qu'**il est un ressort à lame.
